# EUROPEAN PATENT SPECIFICATION

(11) **EP 3 276 278 B1**
(45) Date of publication and mention of the grant of the patent: **15.01.2020**
(21) Application number: 17155602.0
(22) Date of filing: 10.02.2017
(51) Int. Cl.: F24F 13/28, B01D 46/00, F24F 3/16

(54) **FILTER CLEANING DEVICE FOR AN AIR CONDITIONER AND AIR CONDITIONER HAVING SUCH FILTER CLEANING DEVICE**
FILTERREINIGUNGSVORRICHTUNG FÜR EINE KLIMAANLAGE UND KLIMAANLAGE MIT SOLCH EINER FILTERREINIGUNGSVORRICHTUNG
DISPOSITIF DE NETTOYAGE DE FILTRE POUR UN CLIMATISEUR ET CLIMATISEUR ÉQUIPÉ DUDIT DISPOSITIF DE NETTOYAGE DE FILTRE

(30) Priority: 28.07.2016 EP 16181788
(43) Date of publication of application: 31.01.2018
(73) Proprietor: Daikin Industries, Ltd., Osaka-shi, Osaka 530-8323 (JP); Daikin Europe N.V., 8400 Oostende (BE)
(72) Inventor: Suchánsky, Ivan, 293 01 Mladá Boleslav (CZ); Vyvoda, Ludek, 301 00 Plzen (CZ)
(74) Representative: Hoffmann Eitle

(56) References cited:
- EP-A1- 2 141 421
- EP-A2- 1 632 728
- WO-A1-2010/052965
- JP-A- 2007 271 174
- JP-A- 2009 082 837
- JP-A- 2011 214 742

## Description

### TECHNICAL FIELD

The present invention relates to filter cleaning devices for air conditioners, particularly so-called duct-type air conditioners and to air conditioners having such filter cleaning devices.

### BACKGROUND

Air conditioners are common in different buildings, particularly in commercial premises such as offices and hotels. In those premises often air conditioners of the so-called duct-type are employed.

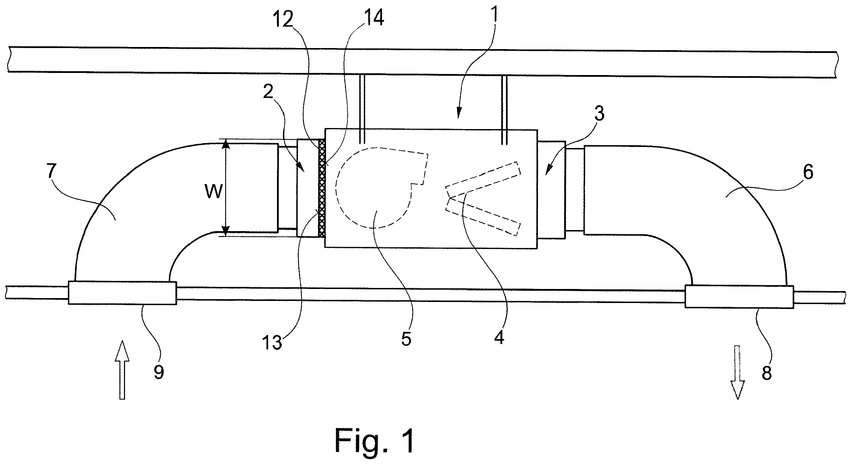

Duct-type air conditioners are understood as air conditioners of which the indoor unit is connected to an air ducting hidden behind a false ceiling or a false wall. In many cases, also the indoor unit is completely or partly hidden behind the false ceiling or the false wall. An example of such an air conditioner is shown in figure 1.

Such duct-type air conditioners 1 generally comprise air ducting 6, 7 located behind a false ceiling U or a false wall. One air ducting 6 leads to an exit grating 8 or exit terminal in a space to be conditioned such as an office, a corridor, a meeting room or a hotel room. Another air ducting 7 leads to an inlet grating 9 or inlet terminal which may either be located within the space to be conditioned or outside that space. The air ducting 7 may alternatively be connected to a ducting network supplying air centrally to a plurality of indoor units.

The air conditioner 1 has an indoor unit comprising a casing having an inlet 2 to which the air ducting 7 is connected and an outlet 3 to which the air ducting 6 is connected. A heat exchanger 4 is located within the casing downstream of the inlet 2 and downstream of one or more fans 5. Yet, the heat exchanger 4 may also be located upstream of the fan/-s 5. A filter 12 having opposite filter surfaces 13, 14 is disposed upstream of the heat exchanger 4 and in many cases located at or near the inlet 2.

An air flow is generated by the fan/-s 5 during operation of the air conditioner 1. Air flows from the inlet grating 9 via the air ducting 7 to the inlet 2, passes the filter 12 and subsequently the heat exchanger 4 for heating or cooling the air before being introduced into the space to be conditioned via the outlet 3, the air ducting 6 and the exit grating 8.

The filter 12 has the purpose of removing particulate matter such as dust and fibers from the air flow to avoid the parts of the air conditioner, particularly the heat exchanger 4, from being soiled and clogged.

Yet, the filter 12 requires regular cleaning to avoid clogging of the filter. Such clogging of the filter may result in an increased resistance to the air flow which requires a higher load on the fan/-s. Hence, clogging of the filter can reduce the efficiency of the air conditioner.

Yet, cleaning of the filter very often requires opening the false ceiling or the false wall and specialized maintenance engineers or cleaning personnel to remove and clean the filter. This is perceived negative. For this reason, systems have been suggested to simplify removal of the filter. Such systems are for example disclosed in KR 10 2003 0083185 A or KR 10 2004 0080810 A.

However, also these systems require cleaning personal to frequently access the spaces to be conditioned, which may disturb the people using the space. To address this problem, filter cleaning devices have been suggested which are able to automatically clean the filter. One system uses a suction force for cleaning the filter, wherein a suction device is communicated with a suction nozzle moving along the filter surface, whereby the particulate matter adhering to the filter surface is removed by the suction force applied via the suction nozzle. Two examples of those devices are disclosed in WO 2007/040276 A1 and WO 2016/009351 A1. However, these devices are, on the one hand, perceived to be relatively complicated and hence expensive and, on the other hand, perceived to either not sufficiently remove the particulate matter or to require a relatively high suction force which may lead to damaging of the filter.

To address these deficiencies, filter cleaning devices have been proposed using a mechanical cleaning member, such as a brush. In this context, many filter cleaning devices are configured to move the filter along the mechanical cleaning member for removing the particulate matter. This, however, requires a specific configuration of the filter, such as having a continuous belt shape or a large space into which the filter is moved before being returned to its original position. Alternative filter cleaning devices disclose to slide the mechanical cleaning member along the filter surface. One such filter cleaning device is disclosed in JP H06-32926 U. Yet, also in this device the brush, being pressed against and slid along the filter, may damage the filter and/or push particulate matter into and even through the filter rather than removing the particulate matter from the filter. In addition, the dust box provided in this device is relatively large so that the entire system requires a lot of space, which in many cases is not available behind a false ceiling or a false wall.

Another filter cleaning device in which a mechanical cleaning member is slid along the filter is disclosed in EP 1 762 790 A2. This system provides a counter surface sliding together with the mechanical cleaning member along the filter and being disposed on a side opposite to the mechanical cleaning member with respect to the filter. This counter surface may prevent particulate matter from being pressed through the filter. However, the problems of particulate matter being pressed into and remaining in the filter and the risk of damaging the filter by sliding the mechanical means and the counter surface along the filter surface remain present. In addition, the kind of mechanical cleaning member used in this filter cleaning device requires a relatively slow movement of the mechanical cleaning member relative to and along the filter. Accordingly, the cleaning efficiency is relatively low. WO 2010/052965 discloses a filter cleaning device having the features defined in the preamble of claim 1.

### SUMMARY OF THE INVENTION

In view of the aforesaid, it is an object of the invention to provide a filter cleaning device and an air conditioner comprising such a filter cleaning device which can overcome or at least reduce the above drawbacks of the prior art.

In particular, it is an object to provide a filter cleaning device and an air conditioner which are capable of maintaining a high efficiency of the air conditioner at the same time reducing the risk of damaging the filter.

According to the invention, a filter cleaning device having the features of claim 1 and an air conditioner having such filter cleaning device as defined in claim 17 are suggested.

In accordance with an aspect, the filter cleaning device for an air conditioner, particularly a duct-type air conditioner, comprises a filter to be passed through by an air flow and having two filter surfaces on opposite sides of the filter in an air flow direction. The filter can be flat and/or longitudinal having a length and a width. The filter can in principle be of any kind as long as it is configured to remove particulate matter, particularly dust and fibers, from the air flow flowing through the filter, and to be used in combination with an air conditioner. As one example, the filter can comprise a frame holding a mesh made of for example plastic material or metallic material. Further, the filter cleaning device comprises a brush as cleaning member, wherein the brush is disposed on one of the opposite sides of the filter so as to engage with one of the filter surfaces during cleaning operation. Furthermore, the filter cleaning device comprises a counter surface (which may also be referred to as abutment or counter bearing) on the other one of the opposite sides of the filter so as to contact the other one of the filter surfaces during cleaning operation. The counter surface can be flat and parallel it to the filter surface. It is however preferred that the counter surface is a curved so as to reduce the contact area between the counter surface and the filter surface. The brush and the counter surface are translationally movable together along the filter, and hence, the two filter surfaces, respectively. Moreover, the brush has a cylindrical shape (is substantially cylindrical) and is rotatably mounted so as to be continuously rotatable about a cylinder axis (the cylinder axis of the cylinder). In this context "continuously rotatable" is to be understood in that the brush can be rotated clockwise and/or counterclockwise without any abutment or limitation of the rotation angle.

According to this aspect, the cleaning member, that is the brush, has a cylindrical shape and is rotatably mounted so as to be continuously rotatable about a cylinder axis. Therefore, removing the particulate matter from the filter can be effected more efficiently because the brush can be moved along the filter more quickly and the particulate matter is brushed away from the filter surface due to the rotational movement of the brush. In addition, because of the rotational movement of the brush, the mechanical forces applied to the filter surface are reduced as compared to a brush slid along the filter surface. Therefore, the risk of damaging the filter can be reduced. Furthermore, the counter surface provides for a reliable engagement of the brush with filter surface during cleaning operation and prevents the filter from being bent because of the mechanical forces applied by the brush. If the counter surface is curved, the friction forces between the counter surface and the filter surface are reduced thereby lowering the risk of damaging the filter surface.

According to an aspect, the counter surface is movably supported relative to the filter in a direction intersecting with (preferably perpendicular to) the opposite filter surfaces and an elastic member (such as a spring) is provided urging the counter surface towards the filter. According to one particular example, the counter surface may be movably supported in that a protrusion at each end of the counter surface is engaged with a long hole so that the protrusion may move within the long hole to provide for the movability of the counter surface. Accordingly, the long hole extends in a direction intersecting with (preferably perpendicular to) the opposite filter surfaces. In this example, the elastic member preferably engages with or at least acts on the protrusion to urge the counter surface towards the filter. The protrusions may in some embodiments (see below) be formed by the axis of a cylinder, wherein the outer surface of the cylinder forms the counter surface.

The filter may be not evenly flat along its length and width. Accordingly, the risk may exist that the brush is not in engagement with some portions of the filter surface during the movement along the filter surface. In this aspect, however, the counter surface is urged toward the filter surface and hence towards the brush, whereby the filter surface is reliably engaged with the brush ensuring an as complete cleaning of the filter as possible. In addition, because of the movability of the counter surface towards and away from the filter surface it can be ensured that the brush is engaged with the filter surface at a relatively constant force.

According to a further aspect, the filter has at least one reinforcing rib extending in the direction of movement of the counter surface along the filter and at least one annular groove is provided in the counter surface at least partially accommodating the reinforcing rib of the filter during movement of the counter surface along the filter surface. The reinforcing rib may be integral with the aforesaid frame of the filter and may be of the same material as the frame. In some embodiments, the filter may have one or more longitudinal reinforcing ribs extending along the length of the filter (corresponding to the direction of movement of the counter surface along the filter) and/or one or more transverse reinforcing ribs extending along the width of the filter (corresponding to a direction perpendicular to the direction of movement of the counter surface along the filter). The number of annular grooves will preferably be adapted to the number of longitudinal reinforcing ribs.

The annular groove/-s of the counter surface accommodates the reinforcing rib, whereby the counter surface can be maintained in contact with the filter surface. Accordingly, reliable engagement of the brush with the opposite filter surface can be achieved and smooth movement along the filter surface is obtained.

According to a further aspect, the counter surface has a closed outer surface configured to be impermeable to particulate matter. Accordingly it can be surely prevented that particulate matter is pressed through the filter by the rotating brush.

According to one aspect, the counter surface is the outer surface of a rotatable cylinder.

Using a rotatable cylinder as the counter surface provides for the advantage, that the counter surface is not slid along the filter surface but rolls on the filter surface whereby the mechanical friction between the counter surface and the filter surface is reduced and damaging of the filter surface and, hence, the filter can be avoided.

Further, it is preferred that the cylinder according to this aspect is freely rotatable by friction between the outer surface of the cylinder and the filter surface with which the cylinder is in contact.

Accordingly and because the cylinder is freely rotatable, no driving means is required to drive the cylinder reducing the complexity and hence the costs of the filter cleaning device.

It may according to an aspect be preferred that the axis for rotatably supporting the cylinder is integrally formed with the cylinder. As one example, the counter surface including the axis may be produced from plastic material in an injection molding process, which is very cost-effective. According to a specific embodiment, the cylinder may be produced from two half-cylindrical half shells connected by an integral hinge, wherein one of the shells has at its axial ends a protrusion, respectively, forming the axis. To form the cylindrical counter surface, the half shells are closed about the integral hinge and connected by a fastening member or another connection method. Preferably, the cylinder forming the counter surface is hollow, thus being lightweight.

According to a further aspect, the brush is driven. According to preferred embodiment, the brush is driven so as to rotate in the direction of movement of the brush along the filter surface. "In the direction of movement" is to be understood in this context in that the brush is rotated against the rotation direction which would be imparted to the brush when moving the brush along the filter surface with the brush in contact with the filter surface by friction. To put it differently, the brush is rotated so that the upstream side of the brush is rotated against the filter surface whereas the downstream side rotates away from the filter surface. For example, the brush rotates clockwise if it is moved to the right and the brush rotates counterclockwise if it is moved to the left.

According to this aspect, particulate matter is scrapped or brushed away from the filter surface rather than being brushed and pressed into the filter surface. Thus, removing of particular matter from the filter surface is very efficient.

According to one aspect in which the counter surface is the outer surface of a rotatable cylinder, it is preferred that the brush and the rotatable cylinder rotate in the same direction upon movement of the brush along the filter surface.

According to this aspect, the friction between the rotatable cylinder forming the counter surface and the filter surface is reduced to a minimum as it rolls on the filter surface, thereby reducing the risk of damaging the filter. Further, the brush rotates against the filter surface, therefore providing for a high cleaning efficiency.

According to an aspect, the filter cleaning device further comprises a support at each axial end of the brush rotatably supporting the brush, wherein each of the supports are movable along a guide disposed along a length of the filter. The supports may also be connected to each other. Another support may be provided at each axial end of the counter surface. Also here, the supports may be connected. The supports of the brush and the supports of the counter surface are preferably separate to reduce the size of the filter cleaning device in a width direction of the filter. Yet, in other embodiments, common supports may be used for the brush and the counter surface.

According to this aspect, a secure and controlled movement of the brush along the filter surface can be obtained.

According to this aspect, it is further preferred that the brush and at least one of the supports are driven by a common motor (e.g. electric motor, particularly a stepping motor). According to one embodiment, the motor may be connected to a plurality of gears transferring the rotation of the motor to the brush and to a rack engaged with one of the gears for movement of the support along the guide and, hence, the brush along the filter surface. The motor will preferably be located at a top relative to a casing of the filter cleaning device for safety reasons (e.g. condensation may accumulate at the bottom of the casing and contact of the motor with water should be avoided).

Due to the use of a common motor, less expensive parts are required to rotate the brush and move the brush along the filter surface. In addition, less wiring is necessary as compared to the use of two separate motors.

In this context, it may be preferred that each support has a wheel cooperating with a respective guide, at least one of the wheels being movably mounted on the respective support so that a distance between the wheel movably mounted on one of the supports and the wheel mounted on the other of the supports is adaptable, the movably mounted wheel being urged away from the other wheel by an elastic member (such as a spring).

As the filter may be relatively long, and the guides extend along the length of the filter it may not be excluded that the distance between opposite guides at the axial ends of the brush differs over the length of the filter. As one example, it is well conceivable that the distance at the longitudinal ends of the guides is larger than in a central portion. According to this aspect, however, the distance between opposite wheels on the opposite supports is adaptable, wherein the wheels are urged away from each other. As a consequence, the wheels are always securely pressed into the guides providing for a reliable movement of the brush along the filter.

According to one embodiment, at least one of the supports has two wheels, the two wheels being pivotably mounted on the respective support about an axis different than an axis of rotation of the respective wheels, wherein the two wheels are coupled by an elastic member (such as a spring), whereby the wheels are urged to pivot in opposite directions towards each other.

According to this embodiment, if the wheels are moved closer to each other, the distance between the two wheels and the wheel on the opposite support is increased. To the contrary if the wheels are moved further away from each other, the distance between the wheels and the wheel on the opposite support is decreased. Accordingly, a relatively simple and reliable mechanism can be provided for compensating any tolerances and changes in the distance between the opposite guides. Further, two wheels that each support are preferred for stability reasons. The above mechanism is preferred particularly in this case, because as it provides an adaptability of two wheels with a simple mechanism (only one elastic member is required)

According to one aspect, one of the supports embodies a dust box for receiving particulate matter removed from the filter by the brush.

Because the supports move together with the brush and the counter surface along the filter surface, also the dust box moves together with the brush and the counter surface along the filter surface. Accordingly there is no necessity to provide a dust box extending along the full length of the filter, whereby cleaning of the dust box due to the smaller space of the dust box is simplified. Further, a less bulky filter cleaning device can be provided.

To obtain a reliable cleaning of the filter and removing particulate matter therefrom, it is according to one aspect preferred that the brush has a body and a plurality of bristles radially extending from the body. In addition, because of the use of bristles, optional reinforcing ribs of the filter may be accommodated by a larger bending of the bristles. Alternatively, it is also conceivable to substitute the bristles by a foamed material.

According to one aspect, the filter cleaning device further comprises one limit switch fixed relative to and moving together with the brush and configured to be operated by an actuator fixed relative to the filter, whereby the movement of the brush along the filter is limited. Limitation of the movement may at one end be required to identify the position at which the movement of the brush has to be reversed and at the other end to define a parking position in addition to the possible reversal of the movement direction. In one particular example, the movement of the brush is, hence, limited at both longitudinal ends of the filter. If the limit switch was fixed relative to the filter, two limit switches are required. According to the above aspect, however, one limit switch is sufficient limiting the movement at both ends. Accordingly, this aspect provides for simplification and reduced costs. According to a further aspect, one additional limit switch may be provided which is fixed relative to and moving together with the counter surface and configured to be operated by an actuator fixed relative to the filter, whereby the movement of the counter surface along the filter is limited. This embodiment is particularly applicable, if the brush and the counter surface are driven by separate motors so that each motor is switched by one of the limit switches.

According to an even further aspect an air conditioner, particularly a duct-type air conditioner, having a filter cleaning device as described above is suggested. Even though the use with a duct-type air conditioner is preferred, the present filter cleaning device may also be applied to other air conditioners in which a filter requires regular cleaning.

### BRIEF DESCRIPTION OF THE DRAWINGS

Further features and advantages are described in the following description of one embodiment, which makes reference to the accompanying drawings. The drawings show in:
Figure 1: a schematic view of a duct-type air conditioner;
Figure 2: a perspective view of a filter cleaning device according to an aspect of the present invention;
Figure 3: a front view of the filter cleaning device as shown in figure 2;
Figure 4: a side view of the filter cleaning device as shown in figure 2;
Figure 5: a partial side view of the filter cleaning device shown in figure 2 with the front plate and other parts being removed and with the brush in a parking position;
Figure 6: a cross-section along the line B-B in figure 5;
Figure 7: a partial side view of the filter cleaning device shown in figure 2 with a front plate and other parts being removed and during filter cleaning operation;
Figure 8: a cross-section along the line C-C in figure 7;
Figure 9: the detail D of figure 8;
Figure 10: a partial isometric front view of the filter cleaning device shown in figure 2 with the front plate being removed;
Figure 11: a partial front view of the filter cleaning device shown in figure 2 with the brush and its supports as well as the casing being removed;
Figure 12: a cross-section along the line D-D in figure 11
Figure 13: a partial isometric top view of the filter cleaning device shown in figure 2 with some parts removed;
Figure 14: a partial isometric view of the filter cleaning device shown in figure 2 with some parts removed;
Figure 15: a partial isometric top view of the filter cleaning device shown in figure 2 with some parts removed;
Figure 16: a) a side view of the brush, b) a front view of the brush to be engaged with the filter surface and c) a cross-section along the line A-A in figure 16a);
Figure 17: a) a schematic top view explaining the use of only one motor for moving the brush and the counter surface and b) a cross-section along the line 17b-17b in figure 17a).

### DESCRIPTION OF A PARTICULAR EMBODIMENT

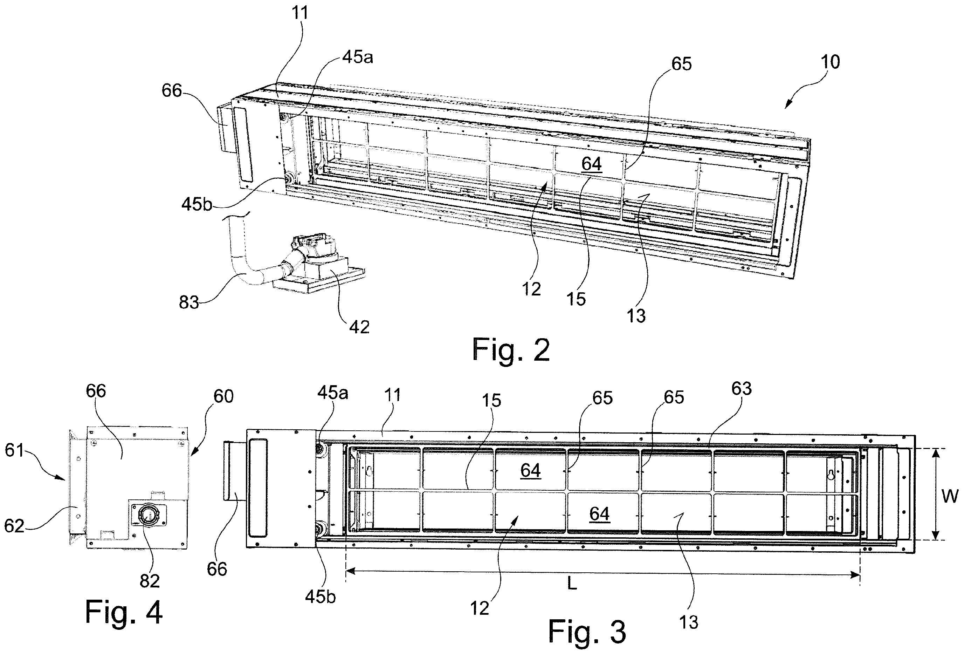

**Figures 2 to 4** generally show a filter cleaning device 10 according to one example. The filter cleaning device comprises a casing 11. The casing 11 has a casing inlet 60 and a casing outlet 61. In operation of the air conditioner, air flows through the casing 11 from the casing inlet 60 to the casing outlet 61 passing the filter 12.

The filter cleaning device 10 may be mounted to existing air conditioners such as the one depicted in **figure 1****,** wherein the existing filter 12 is first removed from the existing indoor unit and a filter cleaning device 10 is attached to the inlet 2 of the existing casing at a flange 62. Alternatively, the filter cleaning device 10 as described herein may already be integrated into the casing of an indoor unit of an air conditioner at the time of production of the air conditioner.

A control box 66 is attached to one side of the casing 11 and configured to control the cleaning operation of the filter 12 described later.

The filter 12 contained in the filter cleaning device 10 is longitudinal and flat having a length L and a width W. In the example, the length L is larger than the width W, whereby the filter 12 is longitudinal. Further, the lengths L and the width W are both much larger than the thickness/height, whereby the filter 12 is flat.

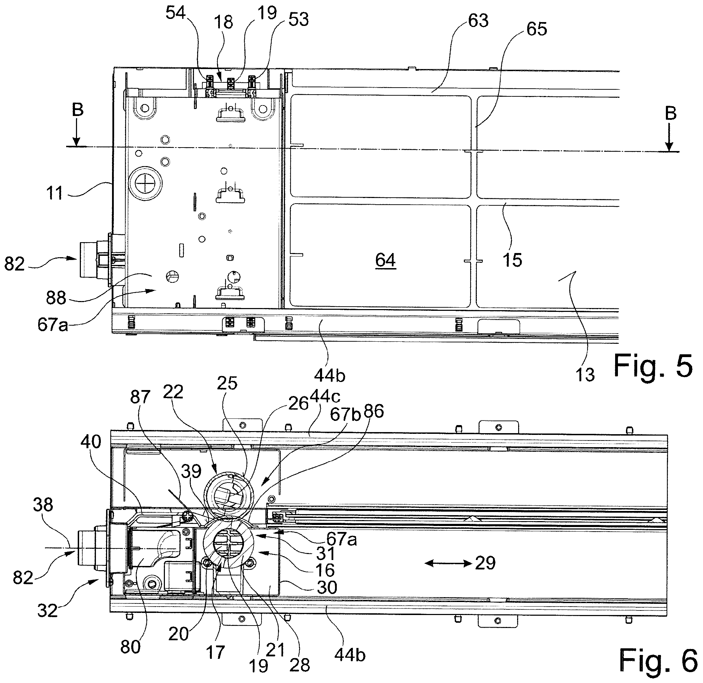

Further, the filter 12 comprises a frame 63 of plastic material, which is molded about a mesh 64 made of plastic material, metal or other suitable material. One longitudinal reinforcing rib 15 and a plurality of transverse reinforcing ribs 65 are provided in order to stabilize the mesh 64 over the length and widths of the filter 12. The filter has a first filter surface 13 facing the inlet 60 and a second filter surface 14 facing the outlet 61. The first and second filter surfaces 13, 14 can be best seen in **figure 6****.**

The filter cleaning device 10 further comprises a cleaning unit 67 configured to clean the filter 12 and particularly its mesh 64. The cleaning unit 67 comprises cleaning member unit 67a and a counter surface unit 67b.

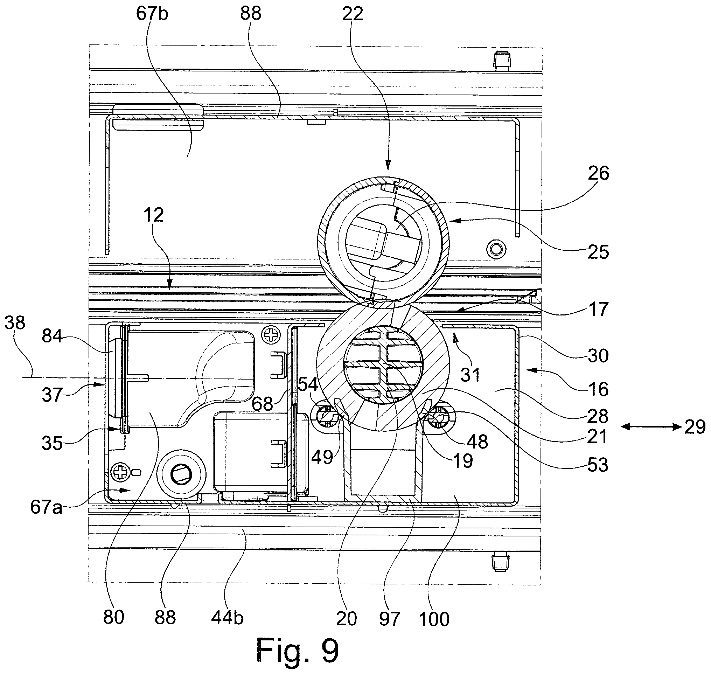

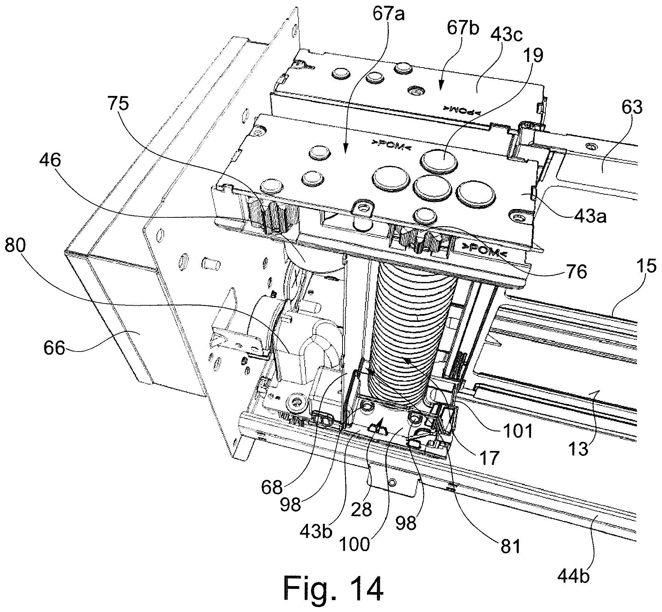

The cleaning member unit 67a has a mechanical cleaning member 16 in the form of a brush 17. The brush 17 consists of a body 20 from which a plurality of separate bristles 21 extend in a radial direction. As can be best seen from the cross-sectional view in **figure 9** and the perspective in **figure 14****,** the brush 17 has a cylindrical shape and is rotatable about an axis of rotation 19, which corresponds to the center axis of the cylinder. The axis of rotation 19 is preferably parallel to the filter surface 13. Furthermore, the axis of rotation 19 of the brush 17 is disposed in a distance to the filter surface 13 which is smaller than the diameter of the brush to ensure contact of the brush 17 with the filter surface 13. Yet, the distance is according to the example larger than the diameter of the body 20 to prevent any damaging of the filter by the brush 17.

Considering figure 14, the brush 17 is basically supported at both its axial ends 18 by supports 43a, 43b forming a support unit. The supports 43 rotatably support or retain the brush 17.

The lower support 43b is embodied as a dust box 28. In particular, the lower support 43b has a bottom 100 and sidewalls 101 surrounding the bottom, whereby the dust box 28 is formed (see figure 14).

The upper support 43a and the lower support 43b of the support unit are respectively provided with two wheels 45a, b. The wheels 45a of the upper support 43a are rotatably fixed to the upper support 43a or an upper portion of a wall 88 of a housing 30 connecting the supports 43a, 43b, respectively. The housing 30 connects to the side walls 100 of the dust box 28 and provides for a shielding effect as described in more detail below. The wheels 45a are rotatable about an axis of rotation 69.

The wheels 45b of the lower support 43b are rotatably and pivotably fixed to the lower support 43b or a lower portion of the wall 88 of the housing 30. In particular, the wheels 45b are rotatably fixed to a pivot arm 71 about an axis of rotation 69 and the pivot arm 71 is pivotably fixed to the lower support 43b or a lower portion of the wall 88 of the housing 30 about a pivot 70. Furthermore, a spring (as an example of the second elastic member) 47 is fixed at one of its opposite ends to the pivot arm 41 of one wheel 45b and the other one of its opposite ends to the pivot arm of the other wheel 45b. Accordingly, the wheels 45b are urged towards each other about the pivots 70.

The wheels 45a at the top are engaged with a longitudinal top guide rail 44a (guide) extending in a length direction of the filter 12 along the filter cleaning device 10. The same applies for the wheels 45b at the bottom, which are engaged with a longitudinal bottom guide rail 44b (guide) extending substantially in parallel to the top guide rail 44a.

Accordingly, the support unit is movably guided between the guide rails 44a, 44b and hence movable along the length of the filter 12 or its filter surface 13, respectively.

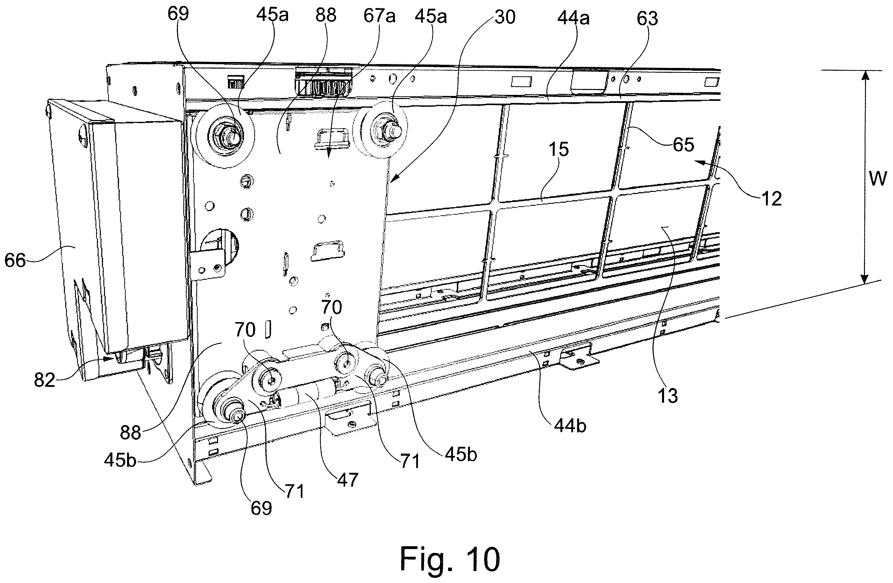

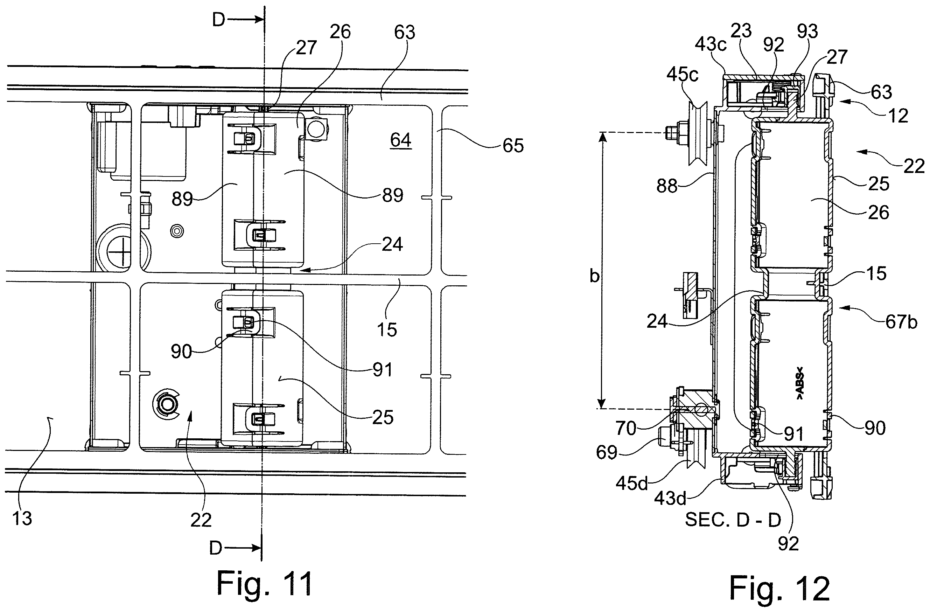

The filter 12 and consequently also the guide rails 44a, 44b can be relatively long. As a consequence, bending of the guide rails 44a, 44b may occur with the result that the distance D (see **figure 12** with respect to the counter surface unit 67b) parallel to the filter surface 13 and between opposite guide rails 44a, 44b at the top and bottom is not constant over the lengths of the guide rails 44a, 44b. As described earlier, the wheels 45b of the lower support 43b are urged towards each other by the spring 47 about the pivots 70. Accordingly, the wheels 45b are urged towards a position in which their distance D to the wheels 45a at the upper support 43a is the largest. Thus, if the distance D between the opposite guide rails 44a, 44b becomes larger, the wheels 45b pivot counterclockwise (left wheel 45b in **figure 10**) and clockwise (right wheel 45b in **figure 10**) about the pivot 70 by the force of the spring 47. Thereby, the wheels 45b at the lower support 43b remain securely engaged with the lower guide rail 44b as do the wheels 45a at the upper support 43a. Similar, if the distance D between opposite guide rails 44a, 44b becomes smaller, the wheels 45b pivot in the opposite direction, thereby automatically compensating for the change in distance D. Accordingly, support unit may reliably be moved along the guide rails 44a, 44b without becoming loose or stuck.

As previously mentioned, the brush 17 is rotatably supported in the support unit. As a result, the support unit serves to move the brush 17 along the filter surface 13. For movement of the support unit along the filter 12, the support unit is driven.

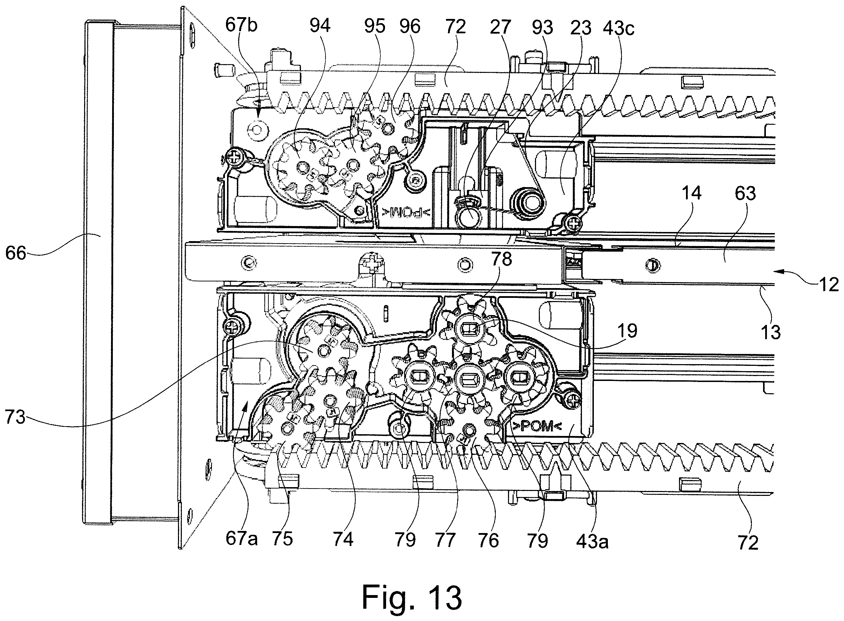

According to one example a rack 72 (see **figure 13**) is provided extending along the filter 12 in parallel to the guide rails 44a, 44b. Furthermore, the support unit comprises a motor 46 (see **figure 14**) which may be a stepping motor. The motor 46 is attached to the upper support 43a, thus avoiding any possible contact with condensate accumulating at the bottom of the filter cleaning device. Further, the motor 46 is with its axis connected to a first gear 73 rotatably attached to the upper support 43a. The first gear 73 meshes with a second gear 74 again meshing with a third gear 75. Also the second and third gear 74 and 75 are rotatably attached to the upper support 43a. The third gear 75 meshes with the rack 72.

Accordingly, the motor 46 rotates the first gear 73, whereby the second gear 74 and the third gear 75 are rotated. Thus, the rotational force is transmitted via the gears 73 to 75 to the rack 72. The rack 72 converts the rotational force into a translational force, whereby the support unit and, hence, the brush 17 rotatably supported therein, are moved along the rack 72 and thereby along the filter 12.

**Figure 13** additionally shows a fourth gear 76 again meshing with the rack 72. A centrally arranged fifth gear 77 meshes with the fourth gear 76 to transfer the rotation to a sixth gear 78. The axis of rotation 19 of the brush 17 is fixed to the axis of rotation of the sixth gear 78. Accordingly, upon operation of the motor 46 and movement of the support unit along the rack 72, the movement of the support unit along the rack 72 results in rotation of the fourth gear 76 meshing with the rack 72. As a consequence, the translational movement of the support unit along the rack 72 is converted into a rotational movement. This rotation is transferred via the centrally arranged fifth gear 77 to the sixth gear 78 thereby rotating the brush 17. In this context, if the support unit moves in **figure 13** to the right, the fourth gear 76 is rotated clockwise whereby the centrally arranged fifth gear 77 is rotated counterclockwise and the sixth gear 78 again rotates clockwise. If the support unit moves in **figure 13** to the left, the fourth gear 76 is rotated counterclockwise whereby the centrally arranged fifth gear 77 is rotated clockwise and the sixth gear 78 again rotates counterclockwise. Thus, the brush 17 is rotated in opposite directions and depending on the direction of movement of the support unit. In particular, the brush 17 is always rotated in the direction of movement. In other words, the upstream side of the brush 17 is always rotated against the filter surface 13 whereas the downstream side of the brush 17 is always rotated away from the filter surface 13.

As will be apparent from the above description, only one motor 46 is used to move the support unit and hence the brush 17 along the filter 12 and hence its filter surface 13, and to rotate the brush 17.

Due to the movability of the cleaning member unit 67a and hence the brush 17 in a longitudinal direction of the filter 12 as explained above, the cleaning member unit 67a may be moved to a parking position shown in **figures 5** and **6** during non-cleaning operation of the cleaning unit. It is preferred that the cleaning unit does not overlap with the filter surfaces 13, 14 of the filter 12 in this parking position as seen in a plan view such as in the cross section of **figure 6** or in a front view as shown in **figure 5****.** Thus it can be prevented that any portion of the filter 12 is blocked by the cleaning unit during non-cleaning operation, that is during air conditioning operation. Thus, the cleaning unit does not represent any obstruction to the air flow flowing through the filter 12 and the whole filter surface 13, 14 may be used.

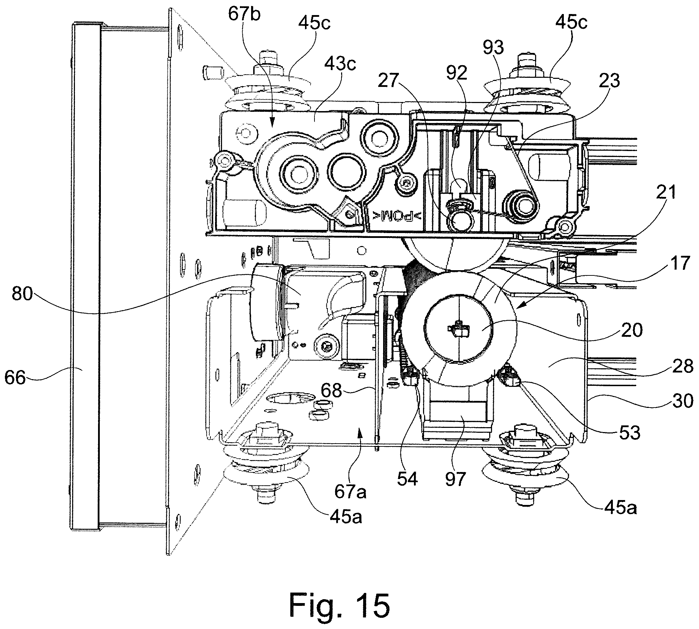

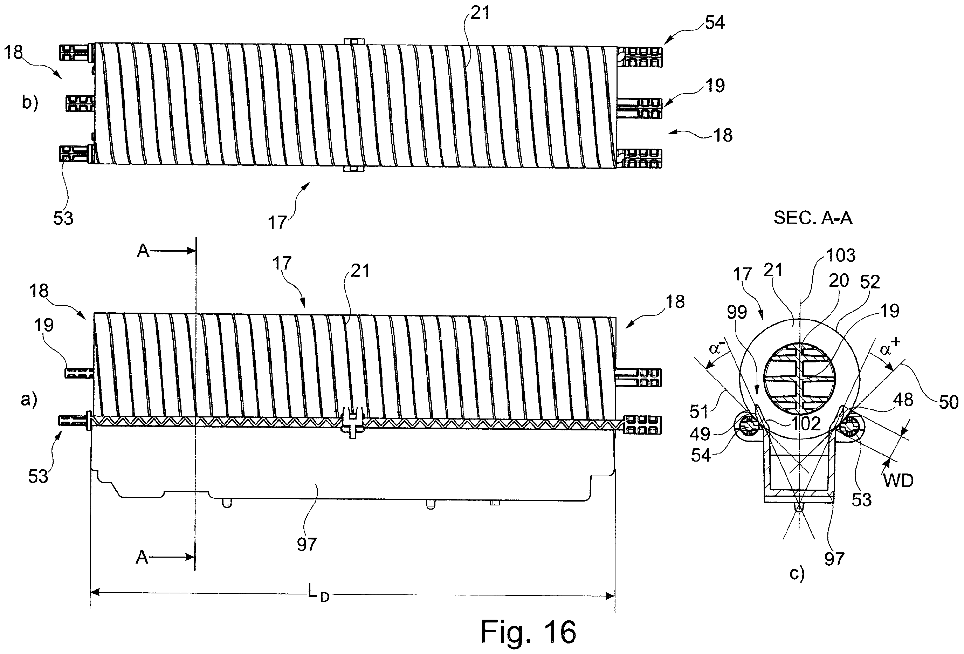

When the brush 17 and particularly its bristles 21 brush along the filter surface 13 and remove the particulate matter therefrom, particulate matter may adhere to the bristles 21. In order to remove the particulate matter from the bristles 21 and, hence, the brush 17, the cleaning unit further comprises a first comb shaped member 48 and a second comb shaped member 49 which are respectively engaged with the brush 17 and particularly the bristles 21 (see **figure 16**). The comb shaped members 48 and 49 extend parallel to the axis of rotation 19 of the brush 17 along the whole axial lengths of the brush 17. Thus, the comb shaped members 48 and 49 have a length along the axial direction and a width perpendicular thereto (seen in the cross-sectional view in figure **16c**). The comb shaped members 48 and 49 further have in their width direction a free edge 99 respectively engaged with the bristles 21 of the brush 17. The opposite edge of the comb shaped members 48 and 49 is respectively connected or integrally formed with a comb body 97. As shown in **figure 15****,** the comb body 97 is fixed to the housing 30 or more particularly the back wall 88 of thereof.

The comb shaped members 48 and 49 are respectively formed along the length direction with a plurality of teeth 102 separated by recesses. In other words, the comb shaped members are configured of a plurality of merlons and crenels. The teeth 102 extend in the width direction from the comb body 97. The cross-sectional line A-A extends through one of the teeth 102. The two comb shaped members 48 and 49 are respectively angled or inclined with their width direction in opposite directions, that is away from each other. To put it differently, the comb shaped members 48 and 49 are inclined in different directions with respect to an axis of symmetry 103. In particular, the teeth 102 are angled or inclined as described above. As may be best seen from the cross-section in figure 16c), the comb shaped members 48 and 49 are respectively arranged symmetrically to the line of symmetry 103. As shown, the comb shaped members 48 and 49 are angled by a positive angle α⁺ and a negative angle α⁻, respectively. In particular, drawing a circle 52 being the outer diameter of the bristles 21 or at least co-axial with the outer diameter of the bristles 21 and drawing a first and second tangent 50, 51 to the circle which are perpendicular to each other, the first comb shaped member 48 is angled clockwise at a negative angle α⁻ and the second comb shaped member 48 is angled counterclockwise at a positive angle α⁺ with their width direction. The absolute value of the angles α is however the same to provide for a symmetric arrangement. In this context, the width direction is preferably drawn as a centerline in the cross-section in figure 16c) at that position of the comb shaped members having the largest thickness perpendicular to the width direction WD and the length direction LD. Accordingly, if the brush 17 is rotated clockwise in figure 16c), the comb shaped member 48 is inclined towards the direction of rotation of the brush 17. If the brush 17 is rotated counterclockwise, the comb shaped member 49 is inclined towards the direction of rotation of the brush 17. Accordingly, it can be effectively achieved that the bristles 21 of the brush 17 and to the recesses between the teeth 102 so that any particulate matter can be scrapped of the bristles 21.

As described above, the brush 17 may rotate in opposite directions and depending on the movement of the support unit. Thus, if the brush rotates clockwise, the first comb shaped member 48 serves for removing or loosening the particulate matter from the bristles 21, whereas if the brush rotates counterclockwise, the second comb shaped member 49 provides for this effect. Thus, a very effective cleaning of the bristles 21 may be affected no matter in which direction the brush 17 rotates.

Furthermore, a first and second separation roller 53 and 54 are provided wherein the first separation 53 is associated to the first comb shaped member 48 and the second separation roller 54 is associated to the second comb shaped member 49. Both separation rollers 53, 54 extend parallel to the axis of rotation 19 of the brush 17. The separation rollers 53, 54 are respectively provided in order to remove the particulate matter loosened by the comb shaped members 48, 49 from the bristles 21 away from the brush 17 so that the particulate matter falls into or towards the bottom 100 of the dust box 28 by gravity. For this purpose, the separation rollers 53, 55 are rotated in the same direction as the brush 17. In particular, the separation rollers 53, 55 is there a centrifuge particulate matter coming into contact with the separation rollers away from the brush 17 and the comb shaped members 48, 49 or at least create an air flow blowing the loosened particulate matter away. In this context, it is preferred that the separation rollers 53 and 54 are located on an outer side of the comb shaped members 48, 49 with respect to the axis of rotation 19 of the brush 17, respectively.

According to one example, two seventh gears 79 (see **figure 13**) are provided meshing with the centrally arranged fifth gear 77. These seventh gears 79 are respectively attached to the axes of rotation of the first and second separation rollers 53 and 54 at their axial ends. As the sixth gear 78 also the seventh gears 79 will be rotated automatically by movement of the support unit along the rack 72 and rotation of the fourth gear 76. The axial ends of the separation rollers 53 and 54 opposite to the seventh gears 79 are rotatably accommodated in the collars 98 at the bottom of the support unit (lower support 43b) as shown in **figure 14****.** In the above example, when the support unit moves to the right, both seventh gears 79 are rotated counterclockwise, whereas both seventh gears 79 are rotated clockwise when the support unit moves to the left. Accordingly also in this case, the motor 46 is used to rotate the first and second separation rollers 53, 54 in the same direction as the brush 17.

The support unit further comprises the housing 30 and a partition 68. The housing 30 together with the partition 68 forms a chamber accommodating the brush 17. That chamber is communicated with the dust box 28 in which particulate matter brushed off the filter 12 or its filter surface is retained before being removed by a vacuum source as explained later. The housing 30 together with the partition 68 further defines an opening 31 through which a portion of the brush 17 extends (see **figure 9**). Thereby it is ensured that the brush protrudes from the housing 30 and is capable of contacting and brushing the filter surface 13. Further, the housing 30 prevents particulate matter removed from the filter by the brush from being distributed throughout the filter cleaning device. Moreover, the housing 30 shields the dust box 28 and prevents particulate matter already collected in the dust box from being sucked from the dust box during the air conditioning operation. In addition, the relatively small opening 31 enables to reduce exchange of air at the dust box 28, when removing the particulate matter from the dust box using a vacuum source. Thus, building up a relatively high under pressure is simplified.

Moreover, a suction section 32 as shown in **figures 6****,** **8** and **9** is provided for removing the dust accumulated in the dust box 28 from the dust box. The suction section 32 comprises an outlet 37. The outlet 37, which may be a circular opening, has a center axis 38. The outlet 37 is communicated with the dust box 28 via a cleaning path 80 having a cleaning opening 81 (see **figure 14**) opening into the dust box 28.

The suction section 32 further comprises a suction opening 33 fixed to the casing 11 of the filter cleaning device. In this example, a fitting extends from the casing 11 and forms the suction opening 33 at the inside of the casing 11, The fitting further has an exhaust opening 82 at the outside of the casing 11. The suction opening 33 and the exhaust opening 82 may be both circular. The center axis of at least the suction opening 33 is congruent with the center axis 38 of the outlet 37.

In one example, a suction socket 42 (see **figure 2**) may be communicated to the suction opening 33 via a hose 83 connected to the exhaust opening 82 at one end and to the suction socket 42 at the other end. The suction socket 42 may be configured to receive a fitting and/or a hose of a common vacuum cleaner and may be accessible in the false ceiling U or a false wall without the necessity to remove a part of the ceiling or a wall. Further, it may as well be conceivable to dispose the suction socket 42 outside the room to be conditioned via the air conditioner. Thus, cleaning personal is enabled to remove dust from the dust box 28 without having to enter the room to be conditioned such as the hotel room or a meeting room.

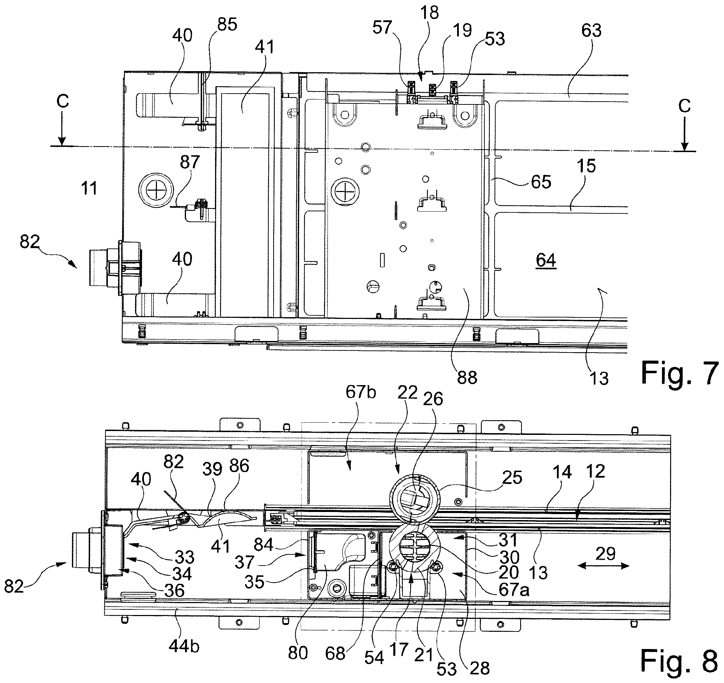

Once the cleaning operation is finished, the cleaning unit moves towards the left in **figure 8** until it reaches the parking position mentioned above. In this parking position the outlet 37 is communicated with the suction opening 33, whereby the dust box 28 is communicated via the cleaning opening 81, the cleaning path 80, the outlet 37 to the suction opening 33 and, hence, to the exhaust opening 82.

A sealing member 34 is provided at an area 35 surrounding the outlet 37 and/or an area 36 surrounding the suction opening 33. Upon movement of the cleaning unit to the parking position, the sealing 34 is sandwiched and pressed between the area 35 and the area 36 and the outlet 37 is communicated with the suction opening 33. In order to be sufficiently pressed, the stepping motor 46 is controlled by the control box 66. Upon a feedback of a positioning sensor (such as a limit switch) that the cleaning unit has reached the parking position the control is configured to move the cleaning unit towards the left (in the direction of the parking position) at least one additional distance (one or more steps of the stepping motor). Accordingly a relatively tight and reliable seal can be achieved.

As described above, the positioning sensor may be a limit switch used to define the parking position of the cleaning member unit 67a. A limit switch may also be used to define an end position in the direction of movement opposite to the parking position at which the cleaning member unit 67a changes its direction of movement. The limit switches are particularly used to control the motor 46 (for example on/off or changing direction). In one embodiment, one limit switch may be used at each of the parking position and the end position with the limit switches being fixed relative to the filter 12 not moving together with the cleaning member unit 67a. In such an embodiment, two limit switches are required. Yet and according to a preferred embodiment, only one limit switch 104 is employed, wherein the limit switch is mounted on (fixed relative to) the cleaning member unit 67a moving together with the cleaning member unit 67a. Hence, the limit switch 104 is fixed relative to the brush 17 and moves together with the brush 17 along the filter 12. The limit switch 104 cooperates with actuators 105 fixed relative to the filter 12 (that is not moving together with the cleaning member unit/brush). Hence, at one end (parking position) the limit switch 104 contacts one actuator 105a to define one position and at the other end (end position) the limit switch 104 contacts another actuator 105b to define another position. Accordingly, only one limit switch 104 is required which simplifies the configuration and reduces the costs. Another two limit switches may be provided but associated to the counter surface unit 67b. Yet, also in this case it is preferred to use only one limit switch 104 fixed relative to the counter surface unit 67b and moving together with the counter surface unit 67b and cooperating with actuators 105 fixed relative to the filter 12 (that is not moving together with the counter surface unit 67b/counter surface 22). Thus, the same principle is applied as explained above and the same beneficial effect is obtained.

Additionally or alternatively to the sealing 34, a shroud 84 may be provided surrounding the outlet 37 or the suction opening 33. Upon reaching the parking position, the shroud 84 enters into the suction opening 33 and engages with an inner circumferential surface of the suction opening 33, thereby achieving a sealing effect. However, to achieve a reliable and sufficient sealing, relatively small tolerances regarding the inner diameter of the suction opening 33 and the outer diameter of the shroud 84 are required. For this reason, the above-described sealing 34 is preferred. In one embodiment, the shroud 84 may, hence, dispense the sealing function and merely provide for centering the outlet 37 relative to the suction opening 33. For this purpose, the shroud 84 may have a tapering 85 towards the suction opening 33, whereby upon engagement of the shroud 84 in the suction opening 33 a self-centering effect is obtained.

Moreover, a lid 39 is fixed to the casing 11 as best shown in **figures 7** and **8****.** More particular, the lid 39 in this example is rotatably fixed to the casing 11 about the rotation axis 85. In this example the lid 39 is comprised of a covering 86 forming a cavity 41 and an actuating arm 40. The covering 86 and the cavity 41 are located on one side relative to the axis 85 and the actuating arm 40 is located on the other side relative to the axis 85. The lid 39 is urged about the axis 85 counterclockwise by a leg spring 87 (third elastic member). In particular and with reference to the following description of its function, the lid 39 is urged towards an opening position.

When the cleaning unit is moved towards the parking position (e.g. from the position in **figure 8** towards the left), the left end of the housing 30 or any other part of the cleaning unit comes in contact (engages) with the actuating arm 40. Accordingly, the cleaning unit pushes the actuating arm 40 in a clockwise direction about the axis 85. Thereby the covering 86 is rotated toward the housing 30 against the force of the leg spring 87. In the parking position, shown in **figures 5** and **6****,** the covering 86 closes the opening 31 of the housing 30 and the cavity 41 accommodates that portion of the brush 17 protruding from the opening 31. Lid 39 is, thus, capable of preventing any particulate matter accumulated in the dust box 28 from leaving the dust box 28 and the housing 30 during air conditioning operation.

In this parking position also the outlet 37 and the suction opening 33 are communicated. Thus, upon plugging a fitting of a vacuum cleaner into the suction socket 42 and applying a suction force, particulate matter accommodated in the dust box 28 is sucked from the dust box 28. Further and due to the pressure reduction within the dust box 28, the covering 86 is sucked against the edge of the opening 31 of the housing. In another example, it may, hence, well be to dispense the actuating arm 40 and to merely close the lid 39 by the suction force applied by the vacuum cleaner in the parking position. In this example, however the opening 31 will only be closed during cleaning of the dust box 28 and the effect of preventing particulate matter from being drawn from the dust box 28 during the air conditioning operation is dispensed. Yet, closing of the opening 31 by the lid 39 also provides for a more effective cleaning of the dust box 28 as compared to a non-sealed opening. In particular, a higher under pressure may be built up within the dust box 28 leading to a more effective or more complete cleaning of the dust box 28 by the vacuum cleaner.

The cleaning unit further comprises the counter surface unit 67b. The counter surface unit 67b comprises a counter surface 22 (see **figures 11** and **12**). In this example, the counter surface 22 is formed by the outer surface 25 of a cylinder 26. The cylinder 26 is rotatably supported in a supporting unit formed by an upper support 43c and a lower support 43d connected by a back wall 88. The support unit is configured very similar to that of the cleaning member unit 67a and comprises two upper wheels 45c and to lower wheels 45d wherein the wheels 45c, 45d and their connection are embodied in the same manner as described with respect to the cleaning member unit 67a and as shown in **figure 10****.** Accordingly and in order to avoid repetition these elements are not described in more detail at this stage. Similar, motor 46 is also provided in the support unit (**figure 11**). The motor 46 is with its axis connected to eighth gear 94 meshing with a ninth gear 95 again meshing with a tenth gear 96 meshing with the rack 72. Thus, the support unit of the counter surface unit 67b is moved along the rack 72 upon operation of the motor 46 in the same manner as the support unit of the cleaning member unit 67a and further description is omitted.

The cylinder 26 comprises a cylinder axis 27 which is at the same time the axis of rotation of the cylinder 26. The cylinder 26 has at its center in the axial direction an annular groove 24. As can be best seen from **figures 11** and **12** the annular groove 24 accommodates the longitudinal reinforcing rib 15 of the filter 12. Thereby it can be ensured that the outer surface 25 of the cylinder reliably pushes the mesh 64 of the filter 12 against the bristles 21 of the brush 17 and closes the mesh 64 at the filter surface 14 in order to prevent particulate matter from being pressed through the mesh 64. Certainly, a plurality of such annular grooves 24 can be provided if a plurality of longitudinal reinforcing ribs 15 is provided.

In the shown example, the cylinder 26 is hollow. For ease of production, the cylinder 26 can be produced from half shells 89. The half shells 89 are each half circular in cross section and, thus, a half cylindrical. The half shells may be at one end be connected by a living or integral hinge. In addition, the axis of rotation 27 may be integrally formed with one of the half shells 89. For this purpose, two coaxial protrusions may extend from the axial end of the half shells in an axial direction. Thus, the cylinder 26 may be injection molded from plastic material. To form the cylinder 26, the half shells 89 are rotated about the living hinge and fixed together by latches 90 at one of the half shells 89 and corresponding hooks 91 at the other one of the half shells 89. Certainly also other methods for fixing the half shells may be used. Also the half shells may be formed separately and then be fixed together without the use of a living hinge.

Furthermore, the filter 12 may along its length not to be completely flat but bend in a direction towards the counter surface unit 67b and/or the cleaning member unit 67a or even wavy. Accordingly, it could happen that either the brush 17 comes out of contact with the filter surface 13 reducing cleaning efficiency or that the brush 17 is pushed into the filter surface 13 to heavily with the risk of damaging the filter. To cope with this problem, the cylinder 26 and hence the counter surface 21, formed by the outer surface 25 of the cylinder 26, is urged towards the filter surface 14.

As one example, the axis of rotation 27 of the cylinder 26 is guided in a long hole 92 (also see **figure 15**). The longitudinal direction of the long hole 92 extends in a direction perpendicular to the filter surface 14. Accordingly, the cylinder 26 may move in a direction perpendicular to the filter surface 14. A leg spring 23 (as an example of a first elastic member) is provided in order to urge the cylinder 26 in a direction towards the filter surface 14. More particularly, the axis of rotation 27 of the cylinder 26 is rotatably fixed to a carriage 93. The carriage 93 is translationally movable in the long hole. Accordingly and even though the counter surface 22 formed by the outer surface 25 of the cylinder 26 is rigid in a radial direction, the movability of the cylinder 26 in a direction perpendicular to the filter surface 14 accommodates changes in the distance of the filter surface 14 to the outer surface 25 due to unevenness of the filter 12 along its length. Accordingly the filter is always reliably pressed against the rotating brush 17 or more particularly its bristles 21 at a relatively constant force so that a high cleaning efficiency may be achieved without the risk of damaging the filter.

In the present example, the cleaning member unit 67a and the counter surface unit 67b are respectively formed independent and separate from each other. More particularly, the support units are formed separately. Accordingly, the filter cleaning device 10 may have a relatively low width (or height) being substantially dependent on the width of the filter 12. However in alternative embodiments, the support units may also be connected above and/or below the frame 63 of the filter 12. This would provide for the advantage that only one motor 46 would be required for both units 67a, 67b.

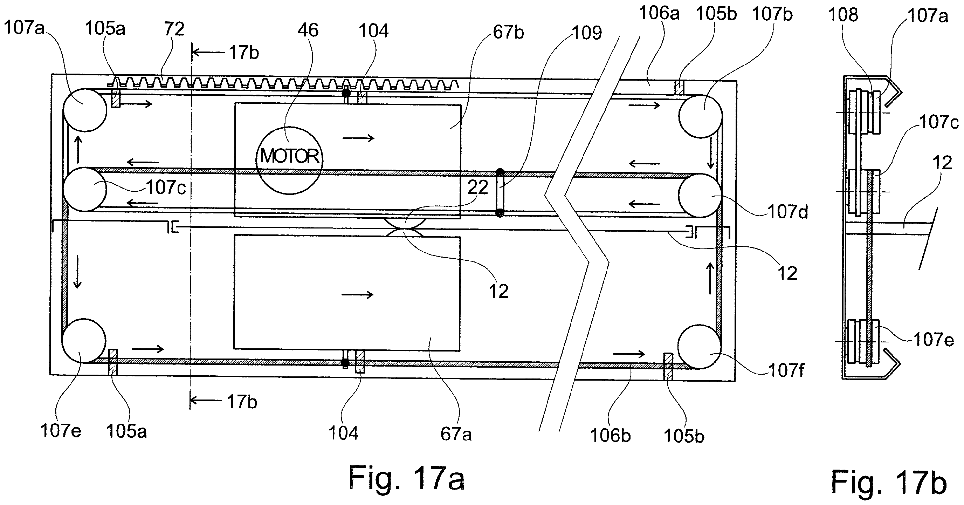

Another possibility to achieve this effect, however without having to connect the support units, will be explained in the following and with reference to figure 17.

In order to couple the movement of the units 67a, 67b, two preferably closed-loop belts 106a, 106b are provided. One of the belts 106a is connected to the counter surface unit 67b and guided about the first to fourth non-rotatable pulleys or guides 107a-d. The other belt 106b is connected to the cleaning member unit 67a and guided about the third and fourth guide 107c and d and a fifth and sixth non-rotatable pulley or guide 107 e and f. The guides 107 may have one or two circumferential grooves 108 to accommodate the belt or belts 106 in order to avoid slipping off the belts 106 from the guides 107. Further, the two belts 106 are connected by means of a substantially rigid connection element 109.

When the motor 46, as the only motor, is driven, the counter surface unit 67b is moved along the rack 72 as described above and hence along the filter 12. Thereby and as shown in figure 17a, the belt 106a moves about the guides 107a to 107d in a clockwise direction. Due to the connection of the belts 106a, b, the belt 106b is moved about the guides 107c to f in a counterclockwise direction. Thereby, the belt 106b connected to the cleaning member unit 67a moves the cleaning member unit 67a together with the counter surface unit 67b to the right in figure 17a. This process can be reversed once the units 67a and 67b have reached the end position at the right and the direction of movement is reversed returning the units into the parking position.

In the following, the function of the above-described filter cleaning device will be explained.

In the non-cleaning operation and during air conditioning operation, the cleaning unit including the brush 17 and the counter surface 22 is positioned in the parking position shown in **figures 2 to 6****.**

First, the control considers whether cleaning operation is required. In this context, different parameters and can trigger that cleaning operation is required. As one example, the cleaning operation is performed in a predetermined time interval. Alternatively, a sensor may be provided capable of measuring a degree of particulate matter on the filter such as a sensor capable of measuring a flow resistance of air flowing through the filter. The output of this sensor may be used by the control to trigger the cleaning operation. Certainly, also other para meters may be used for this purpose.

Once cleaning operation is started, the control in the control box 66 cooperates with the control of the air conditioner to temporarily stop the air conditioning operation. Subsequently, the motors 46 are activated. Accordingly, the cleaning member unit 67a and the counter surface unit are moved from the left to the right along the filter surfaces 13, 14 respectively, wherein the rotational force of the motors 46 is transferred via the gears 73 to 75 to the rack 72 and the gears 94 to 96 to the rack 72. At the same time the brush 17 is rotated, wherein the translational movement of the support unit of the cleaning member unit 67a along the rack 72 is converted and transmitted via the gears 76, 77 and 78 to the axis of rotation 19 of the brush 17, thereby rotating the brush 17 clockwise. Accordingly the bristles 21 brush particular matter from the filter surface 14 away from the filter surface 14 whereby the particulate matter is transferred by the brush 17 through the opening 31 into the housing 30 and subsequently falls into the dust box 28 by gravity.

In the housing 30, the particulate matter is scrapped away from the bristles 21 by the first comb shaped member 48. The first separation roller 53 being rotated by the gear 79 in a counterclockwise direction ensures that the particulate matter scrapped away from the bristles 21 by the first comb shaped member 48 is moved away from the bristles 21. The thus separated particulate matter will then fall into the dust box 28 or particularly towards its bottom 100 by gravity and will be collected at the bottom 100 of the dust box 28 (lower support 43b).

The counter surface 22 formed by the outer surface 25 of the cylinder 26 is moved together with the brush 17 along the filter 12 being in contact with the opposite filter surface 14. In particular, a line connecting the axis of rotation 27 and the axis of rotation 19 is perpendicular to the filter surfaces 13, 14. Accordingly, the counter surface 22 supports the filter 12 at the side of the filter surface 14 so as to keep the mesh 64 in contact with the bristles 21 of the brush 17. During the movement of the brush 17 and the counter surface 21 along the filter 12, the counter surface 22 may compensate for any deviations of the filter 12 from an evenly flat shape in that it may move perpendicular to the filter surfaces 13, 14 within the long hole 92. Further, as the counter surface 22 is urged towards the filter surfaces 13, 14 by the leg spring 23, the bristles 21 are engaged with the filter surface 13 at a relatively constant pressure/force along the length of the filter. Accordingly, an efficient and reliable cleaning can be performed without the risk of damaging the filter.

Further, it is to mention that the counter surface 22 particularly the cylinder 26 is not actively driven or rotated, but rotates because of its frictional contact with the filter surface 14. When the cleaning unit moves to the right, the cylinder 26 hence rotates in the same direction as the brush 17, that is clockwise. Due to the rotation of the counter surface and its curved shape, the contact area and the friction between the contact area and the filter surface 14 is relatively low so that any damaging of the filter 12 by the counter surface 22 can reliably be prevented.

Once the cleaning unit has reached the end of the filter 12 opposite to the parking position, the rotation direction of the motors 46 is switched. This can for example be triggered by the cleaning unit moving against a limit switch, thereby switching the motors 46. Yet, also other control mechanisms are conceivable. Switching the rotational direction of the motors 46 changes the rotational direction of all gears 33 to 79 and 94 to 96. Accordingly, the brush 17 is rotated counterclockwise as are the separation rollers 53 and 54. During the movement to the left, the cylinder 26 is again rotated by frictional engagement with the filter surface 14, however, now counterclockwise. During movement in this direction, the second comb shaped member 49 and the second separation roller 54 are active for scrapping the particulate matter from the bristles 21 and move the scrapped of particulate matter away from the bristles 21 for being collected in the dust box 28.

The above process may be repeated as required until the cleaning operation is finished. If a command has been provided by the control in the control box 66 that the cleaning operation can be terminated, the cleaning unit is again moved to the parking position. During this movement and as previously indicated, the housing 30 of the cleaning unit engages with/comes into contact with the actuating arm 40 thereby pivoting the lid 39 around the axis 85 in a clockwise direction, whereby the covering 86 closes the opening 31 in the housing 30. If the cleaning unit has reached the parking position which may be indicated to the control by the use of a sensor or a limit switch, the motors 46 are activated to perform at least one more step towards the parking position in order to press the sealing 34 and securely communicate the outlet 37 and the suction opening 33. Subsequently, the cleaning operation is finished.

The cleaning personal in the premises in which the filter cleaning devices are mounted may in a regular interval then plug a fitting of the vacuum cleaner into the suction socket 42 and thereby apply a sucking force to the suction opening 33, whereby particulate matter accumulated at the bottom 100 of the dust box 28 is sucked from the dust box 28 via the cleaning opening 81, the cleaning path 80, the outlet 37, the suction opening 33, the exhaust opening 82, the hose 83 and the suction socket 42 into the vacuum cleaner. According to an alternative example, it may be conceivable to connect the control in the control box 66 to a network within the premises and to output a signal that the cleaning operation has been performed to the network so as to indicate to the cleaning personal that the dust box 28 is to be emptied. It is also possible to provide a visual indicator such as a light at the suction section 42, which could indicate to the cleaning personal that emptying the dust box 28 is required (for example a red light for cleaning and a green light for non-cleaning requirement). Instead of using a predetermined interval as requirement for removing the particulate matter from the dust box 28 or triggering the necessity to empty the dust box 28 by the termination of the cleaning operation, sensors outputting information on the amount of particulate matter accumulated in the dust box 28 can be used. This information can be outputted to the network or used to control the visual indicator. In a preferred embodiment, the suction section 42 is disposed outside the space to be conditioned, whereby the cleaning personal does not need to enter this space for emptying the dust box 28.

As will be apparent from the above description, the filter cleaning device described above provides for a very efficient system overcoming the problems adhering to the prior art to at least to some extent.

**REFERENCE LIST**

| | |
|---|---|
| Air conditioner | 1 |
| Inlet | 2 |
| Outlet | 3 |
| Heat exchanger | 4 |
| Fan | 5 |
| Air ducting | 6, 7 |
| Exit grating | 8 |
| Inlet grating | 9 |
| Filter cleaning device | 10 |
| Casing | 11 |
| Filter | 12 |
| Filter surface | 13, 14 |
| Width of the filter | W |
| Length of the filter | L |
| Longitudinal reinforcing rib | 15 |
| Cleaning member | 16 |
| Brush | 17 |
| Axial end of the brush | 18 |
| Axis of rotation (cylinder axis) | 19 |
| Body | 20 |
| Bristles | 21 |
| Counter surface | 22 |
| First elastic member | 23 |
| Annular groove | 24 |
| Outer surface | 25 |
| Cylinder | 26 |
| Axis | 27 |
| Dust box | 28 |
| Direction of movement | 29 |
| Housing | 30 |
| Opening | 31 |
| Suction section | 32 |
| Suction opening | 33 |
| Sealing | 34 |
| Area surrounding the outlet | 35 |
| Area surrounding the suction opening of the casing | 36 |
| Outlet | 37 |
| Center axis | 38 |
| Lid | 39 |
| Actuating arm | 40 |
| Cavity | 41 |
| Suction socket | 42 |
| Support | 43 a-d |
| Guide | 44 a-d |
| Wheel | 45 a-d |
| Motor | 46 |
| Second elastic member | 47 |
| First comb shaped member | 48 |
| Second comb shaped member | 49 |
| Length direction | LD |
| Width direction | WD |
| First tangent | 50 |
| Second tangent | 51 |
| Circle | 52 |
| Positive angle | α⁺ |
| Negative angle | α⁻ |
| First separation roller | 53 |
| Second separation roller | 54 |
| Casing inlet | 60 |
| Casing outlet | 61 |
| Flange | 62 |
| Frame | 63 |
| Mesh | 64 |
| Transverse reinforcing rib | 65 |
| Control box | 66 |
| Cleaning unit | 67a-b |
| Partition | 68 |
| Axis of rotation | 69 |
| Pivot | 70 |
| Pivot arm | 71 |
| Rack | 72 |
| first gear | 73 |
| second gear | 74 |
| third gear | 75 |
| fourth gear | 76 |
| fifth gear | 77 |
| sixth gear | 78 |
| seventh gear | 79 |
| Cleaning path | 80 |
| Cleaning opening | 81 |
| Exhaust opening | 82 |
| Hose | 83 |
| Shroud | 84 |
| Rotation axis | 85 |
| Covering | 86 |
| third elastic member | 87 |
| Back wall | 88 |
| Half shells | 89 |
| Latch | 90 |
| Hook | 91 |
| Long hole | 92 |
| Carriage | 93 |
| eighth gear | 94 |
| ninth gear | 95 |
| tenth gear | 96 |
| Comb body | 97 |
| Collar | 98 |
| Free edge | 99 |
| Bottom | 100 |
| Side walls | 101 |
| Teeth | 102 |
| Axis of symmetry | 103 |
| Limit switch | 104 |
| Actuator | 105a, b |
| Belt | 106a, b |
| Guides | 107a-f |
| Groove | 108 |
| Connection element | 109 |

## Claims

1. Filter cleaning device (10) for an air conditioner (1), particularly a duct-type air conditioner, the filter cleaning device comprising:
a filter (12) to be passed through by an air flow and having two filter surfaces (13, 14) on opposite sides of the filter in an air flow direction;
a brush (17) on one of the opposite sides of the filter; and
a counter surface (22) on the other one the opposite sides of the filter,
wherein the brush has a cylindrical shape and is rotatably mounted so as to be continuously rotatable about a cylinder axis (19),
**characterized in that**
the filter cleaning device is configured so that the brush and the counter surface are translationally movable together along the two filter surfaces, respectively.

2. Filter cleaning device according to any one of the preceding claims, wherein the counter surface (22) is movably supported relative to the filter (12) in a direction intersecting with the opposite filter surfaces (13, 14) and an elastic member (23) is provided urging the counter surface towards the filter.

3. Filter cleaning device according to any one of the preceding claims, wherein the filter (12) has at least one reinforcing rib (15) extending in the direction of movement of the counter surface (22) along the filter surface (14) and an annular groove (24) is provided in the counter surface at least partially accommodating the reinforcing rib of the filter during movement of the counter surface along the filter surface (14).

4. Filter cleaning device according to anyone of the preceding claims, wherein the counter surface (22) has a closed outer surface (25) impermeable for particulate matter.

5. Filter cleaning device according to any one of the preceding claims, wherein the counter surface (22) is the outer surface (25) of a rotatable cylinder (26).

6. Filter cleaning device according to claim 5, wherein the cylinder (26) is freely rotatable.

7. Filter cleaning device according to claim 5 or 6, wherein an axis (27) for rotatably supporting the cylinder (26) is integrally formed with the cylinder.

8. Filter cleaning device according to any one of the preceding claims, wherein the brush (17) is driven so as to rotate in the direction of movement of the brush along the filter surface (13).

9. Filter cleaning device according to claim 8 and anyone of claims 5 to 7, wherein the brush (17) and the rotatable cylinder (26) rotate in the same direction upon movement of the brush along the filter surface (13).

10. Filter cleaning device according to any one of the preceding claims, further comprising a support (43a, 43b) at each axial end (18) of the brush (17) rotatably supporting the brush, wherein each of the supports (43a, 43b) is movable along a guide (44a, 44b) disposed along a length of the filter (12).

11. Filter cleaning device according to claim 10, wherein the brush (17) and at least one of the supports (43a, 43b) are driven by a common motor (46).

12. Filter cleaning device according to claim 10 or 11, wherein each support (43a, 43b) has a wheel (45a, 45b) cooperating with the respective guide (44a), at least one of the wheels (45b) being movably mounted on the respective support (43b) so that a distance (D) between the wheel (45b) movably mounted on one of the supports (43b) and the wheel (45a) mounted on the other of the supports (43a) is adaptable, the movably mounted wheel (45b) being urged away from the other wheel (45a) by an elastic member (47).

13. Filter cleaning device according to claim 12, wherein at least one of the supports (43b) has two wheels (45b), the two wheels (45b) being pivotably mounted on the respective support (43b) about an axis (70) different than an axis of rotation (69) of the respective wheels (45b), wherein the two wheels (45b) are coupled by the elastic member (47), whereby the wheels (45b) are urged to pivot in opposite directions towards each other.

14. Filter cleaning device according to anyone of claims 10 to 13, wherein one of the supports (43b) embodies a dust box (28) for receiving particulate matter removed from the filter by the brush (17).

15. Filter cleaning device according to any one of the preceding claims, wherein the brush (17) has a body (20) and a plurality of bristles (21) radially extending from the body.

16. Filter cleaning device according to any one of the preceding claims, further comprising at least one limit switch fixed relative to the brush and configured to be operated by an actuator, preferably two actuators, fixed relative to the filter.

17. Air conditioner, particularly a duct-type air conditioner, the air conditioner having a filter cleaning device according to any one of the preceding claims.

## Patentansprüche

1. Filterreinigungsvorrichtung (10) für eine Klimaanlage (1), insbesondere für eine Klimaanlage vom Kanaltyp, wobei die Filterreinigungsvorrichtung umfasst:
einen Filter (12), der von einem Luftstrom zu durchlaufen ist und zwei Filteroberflächen (13, 14) auf gegenüberliegenden Seiten des Filters in einer Luftstromrichtung aufweist;
eine Bürste (17) auf einer der gegenüberliegenden Seiten des Filters; und
einer Gegenoberfläche (22) auf der anderen der gegenüberliegenden Seiten des Filters,
wobei die Bürste eine zylindrische Form aufweist und derart drehbar montiert ist, dass sie um eine Zylinderachse (19) fortlaufend drehbar ist,
**dadurch gekennzeichnet, dass**
die Filterreinigungsvorrichtung derart eingerichtet ist, dass die Bürste und die Gegenoberfläche gemeinsam jeweils entlang der zwei Filteroberflächen translatorisch bewegbar sind.

2. Filterreinigungsvorrichtung nach einem der vorstehenden Ansprüche, wobei die Gegenoberfläche (22) relativ zu dem Filter (12) in einer Richtung bewegbar gelagert ist, die sich mit den gegenüberliegenden Filteroberflächen (13, 14) schneidet, und ein elastisches Element (23) bereitgestellt ist, das die Gegenoberfläche hin zu dem Filter drängt.

3. Filterreinigungsvorrichtung nach einem der vorstehenden Ansprüche, wobei der Filter (12) mindestens eine Verstärkungsrippe (15) aufweist, die sich in die Bewegungsrichtung der Gegenoberfläche (22) entlang der Filteroberfläche (14) erstreckt, und eine ringförmige Nut (24) in der Gegenoberfläche bereitgestellt ist, die die Verstärkungsrippe des Filters während einer Bewegung der Gegenoberfläche entlang der Filteroberfläche (14) mindestens teilweise unterbringt.

4. Filterreinigungsvorrichtung nach einem der vorstehenden Ansprüche, wobei die Gegenoberfläche (22) eine geschlossene äußere Oberfläche (25) aufweist, die für Partikelmaterial undurchlässig ist.

5. Filterreinigungsvorrichtung nach einem der vorstehenden Ansprüche, wobei die Gegenoberfläche (22) die äußere Oberfläche (25) eines drehbaren Zylinders (26) ist.

6. Filterreinigungsvorrichtung nach Anspruch 5, wobei der Zylinder (26) frei drehbar ist.

7. Filterreinigungsvorrichtung nach Anspruch 5 oder 6, wobei eine Achse (27) zum drehbaren Lagern des Zylinders (26) einstückig mit dem Zylinder ausgebildet ist.

8. Filterreinigungsvorrichtung nach einem der vorstehenden Ansprüche, wobei die Bürste (17) derart angetrieben ist, dass sie sich in der Bewegungsrichtung der Bürste entlang der Filteroberfläche (13) dreht.

9. Filterreinigungsvorrichtung nach Anspruch 8 und einem der Ansprüche 5 bis 7, wobei die Bürste (17) und der drehbare Zylinder (26) sich auf eine Bewegung der Bürste hin entlang der Filteroberfläche (13) hin in dieselbe Richtung drehen.

10. Filterreinigungsvorrichtung nach einem der vorstehenden Ansprüche, weiter umfassend eine Lagerung (43a, 43b) an jedem axialen Ende (18) der Bürste (17), die die Bürste drehbar lagert, wobei jede der Lagerungen (43a, 43b) entlang einer Führung (44a, 44b) bewegbar ist, die entlang einer Länge des Filters (12) angeordnet ist.

11. Filterreinigungsvorrichtung nach Anspruch 10, wobei die Bürste (17) und mindestens eine der Lagerungen (43a, 43b) von einem gemeinsamen Motor (46) angetrieben werden.

12. Filterreinigungsvorrichtung nach Anspruch 10 oder 11, wobei jede Lagerung (43a, 43b) ein Rad (45a, 45b) aufweist, das mit der jeweiligen Führung (44a) zusammenwirkt, wobei mindestens eines der Räder (45b) derart bewegbar auf der jeweiligen Lagerung (43b) montiert ist, dass ein Abstand (D) zwischen dem Rad (45b), das bewegbar auf einer der Lagerungen (43b) montiert ist, und dem Rad (45a), das auf der anderen der Lagerungen (43a) montiert ist, anpassbar ist, wobei das bewegbar montierte Rad (45b) durch ein elastisches Element (47) von dem anderen Rad (45a) weg gedrängt wird.

13. Filterreinigungsvorrichtung nach Anspruch 12, wobei mindestens eine der Lagerungen (43b) zwei Räder (45b) aufweist, wobei die zwei Räder (45b) an der jeweiligen Lagerung (43b) um eine Achse (70) schwenkbar gelagert sind, die sich von einer Drehachse (69) der jeweiligen Räder (45b) unterscheidet, wobei die zwei Räder (45b) durch das elastische Element (47) gekoppelt sind, wobei die Räder (45b) dazu gedrängt werden, in entgegengesetzte Richtungen hin zu einander zu schwenken.

14. Filterreinigungsvorrichtung nach einem der Ansprüche 10 bis 13, wobei eine der Lagerungen (43b) eine Staubbox (28) zur Aufnahme von Partikelmaterial, der durch die Bürste (17) aus dem Filter entfernt wurde, verkörpert.

15. Filterreinigungsvorrichtung nach einem der vorstehenden Ansprüche, wobei die Bürste (17) einen Körper (20) und eine Vielzahl von Borsten (21) aufweist, die sich radial von dem Körper weg erstrecken.

16. Filterreinigungsvorrichtung nach einem der vorstehenden Ansprüche, weiter umfassend mindestens einen Begrenzungsschalter, der relativ zu der Bürste fixiert und eingerichtet ist, um von einem Aktuator, bevorzugt zwei Aktuatoren, betätigt zu werden, die relativ zu dem Filter fixiert sind.

17. Klimaanlage, insbesondere eine Klimaanlage vom Kanaltyp, wobei die Klimaanlage eine Filterreinigungsvorrichtung nach einem der vorstehenden Ansprüche aufweist.

## Revendications

1. Dispositif de nettoyage de filtre (10) pour un climatiseur (1), en particulier un climatiseur de type à conduit, le dispositif de nettoyage de filtre comprenant :
un filtre (12) qui doit être traversé par un flux d'air et ayant deux surfaces de filtre (13, 14) sur des côtés opposés du filtre dans un sens de flux d'air ;
une brosse (17) sur l'un des côtés opposés du filtre ; et
une surface antagoniste (22) sur l'autre des côtés opposés du filtre,
dans lequel la brosse a une forme cylindrique et est montée, de manière à pouvoir tourner, afin d'être continuellement rotative autour d'un axe de cylindre (19),
**caractérisé en ce que** le dispositif de nettoyage de filtre est configuré de sorte que la brosse et la surface antagoniste puissent se déplacer ensemble par translation respectivement le long des deux surfaces de filtre.

2. Dispositif selon l'une quelconque des revendications précédentes, dans lequel la surface antagoniste (22) est supportée, de manière à pouvoir se déplacer, par rapport au filtre (12) dans un sens en intersection avec les surfaces de filtre opposées (13, 14) et il est prévu un organe élastique (23) sollicitant la surface antagoniste vers le filtre.

3. Dispositif de nettoyage de filtre selon l'une quelconque des revendications précédentes, dans lequel le filtre (12) a une nervure de renfort (15) s'étendant dans le sens de déplacement de la surface antagoniste (22) le long de la surface de filtre (14) et il est prévu une rainure annulaire (24) dans la surface antagoniste accueillant au moins partiellement la nervure de renfort du filtre au cours d'un déplacement de la surface antagoniste le long de la surface de filtre (14).

4. Dispositif de nettoyage de filtre selon l'une quelconque des revendications précédentes, dans lequel la surface antagoniste (22) a une surface extérieure fermée (25) imperméable aux matières particulaires.

5. Dispositif de nettoyage de filtre selon l'une quelconque des revendications précédentes, dans lequel la surface antagoniste (22) est la surface extérieure (25) d'un cylindre rotatif (26).

6. Dispositif de nettoyage de filtre selon la revendication 5, dans lequel le cylindre (26) est rotatif librement.

7. Dispositif de nettoyage de filtre selon la revendication 5 ou 6, dans lequel un axe (27) pour supporter, de manière à pouvoir tourner, le cylindre (26) est formé solidairement avec le cylindre.

8. Dispositif de nettoyage de filtre selon l'une quelconque des revendications précédentes, dans lequel la brosse (17) est entraînée de manière à tourner dans le sens de déplacement de la brosse le long de la surface de filtre (13).

9. Dispositif de nettoyage de filtre selon la revendication 8 et l'une quelconque des revendications 5 à 7, dans lequel la brosse (17) et le cylindre rotatif (26) tournent dans le même sens lors du déplacement de la brosse le long de la surface de filtre (13).

10. Dispositif de nettoyage de filtre selon l'une quelconque des revendications précédentes, comprenant en outre un support (43a, 43b) à chaque extrémité axiale (18) de la brosse (17) supportant la brosse de manière à pouvoir tourner, dans lequel chacun des supports (43a, 43b) est mobile le long d'un guide (44a, 44b) disposé le long d'une longueur du filtre (12).

11. Dispositif de nettoyage de filtre selon la revendication 10, dans lequel la brosse (17) et au moins l'un des supports (43a, 43b) sont entraînés par un moteur commun (46).

12. Dispositif de nettoyage de filtre selon la revendication 10 ou 11, dans lequel chaque support (43a, 43b) a une roue (45a, 45b) coopérant avec le guide respectif (44a), au moins l'une des roues (45b) étant montée, de manière mobile, sur le support respectif (43b) de manière à pouvoir adapter une distance (D) entre la roue (45b) montée de manière mobile sur l'un des supports (43b) et la roue (45a) montée sur l'autre des supports (43a), la roue montée de manière mobile (45b) étant sollicitée à l'écart de l'autre roue (45a) par un organe élastique (47).

13. Dispositif de nettoyage de filtre selon la revendication 12, dans lequel au moins l'un des supports (43b) a deux roues (45b), les deux roues (45b) étant montées, de manière à pouvoir pivoter, sur le support respectif (43b) autour d'un axe (70) différent d'un axe de rotation (69) des roues respectives (45b), dans lequel les deux roues (45b) sont couplées par l'organe élastique (47), de telle manière que les roues (45b) soient sollicitées pour pivoter dans des sens opposés l'une vers l'autre.

14. Dispositif de nettoyage de filtre selon l'une quelconque des revendications 10 à 13, dans lequel l'un des supports (43b) incorpore une boîte à poussière (28) pour recevoir des matières particulaires enlevées du filtre par la brosse (17).

15. Dispositif de nettoyage de filtre selon l'une quelconque des revendications précédentes, dans lequel la brosse (17) a un corps (20) et une pluralité de poils (21) s'étendant radialement depuis le corps.

16. Dispositif de nettoyage de filtre selon l'une quelconque des revendications précédentes, comprenant en outre au moins un interrupteur de fin de course fixe par rapport à la brosse et configuré pour être actionné par un actionneur, de préférence deux actionneurs, fixes par rapport au filtre.

17. Climatiseur, en particulier un climatiseur de type à conduit, le climatiseur ayant un dispositif de nettoyage de filtre selon l'une quelconque des revendications précédentes.
